# EUROPEAN PATENT SPECIFICATION

(11) **EP 2 864 422 B1**
(45) Date of publication and mention of the grant of the patent: **24.04.2019**
(21) Application number: 13730823.5
(22) Date of filing: 06.06.2013
(51) Int. Cl.: C08L 95/00

(54) **MODIFIED BITUMEN AND ITS USE FOR PREPARING ASPHALT MIXTURES AND BITUMINOUS PRODUCTS**
MODIFIZIERTES BITUMEN UND DESSEN VERWENDUNG ZUR HERSTELLUNG VON ASPHALTGEMISCHEN UND BITUMINÖSEN PRODUKTEN
BITUME MODIFIÉ ET SON UTILISATION POUR LA PRÉPARATION DE MÉLANGES À BASE D'ASPHALTE ET DE PRODUITS BITUMINEUX

(30) Priority: 20.06.2012 SI 201200213
(43) Date of publication of application: 29.04.2015
(73) Proprietor: National Institute of Chemistry, 1000 Ljubljana (SI)
(72) Inventor: TUSAR, Marjan, 1360 Vrhnika (SI); NOVIC, Marjana, 1000 Ljubljana (SI); SUSTERSIC, Ema, 1215 Medvode (SI); ZUPANCIC-VALANT, Andreja, 1000 Ljubljana (SI); BELICIC, Andrej, 8340 Crnomelj (SI); PRESEREN, Marijan, 8220 Smarjaske Toplice (SI)
(74) Representative: Scholz, Volker
(86) International application number: PCT/EP2013/061660
(87) International publication number: WO 2013/189748

(56) References cited:
- SI-A- 23 670
- GARCIA-MORALES ET AL: "Effect of waste polymer addition on the rheology of modified bitumen", FUEL, IPC SCIENCE AND TECHNOLOGY PRESS, GUILDFORD, GB, vol. 85, no. 7-8, 1 May 2006 (2006-05-01), pages 936-943, XP005234193, ISSN: 0016-2361, DOI: 10.1016/J.FUEL.2005.09.015
- CEMAL BASARAN ET AL: "Time Dependent Behavior of a Particle Filled Composite PMMA/ATH at Elevated Temperatures", JOURNAL OF COMPOSITE MATERIALS, SAGE PUBLICATIONS, USA, vol. 42, no. 2, 1 October 2008 (2008-10-01), pages 2003-2025, XP009172051, ISSN: 0021-9983, DOI: 10.1177/0021998308094542

## Description

The present invention relates modified bitumen and its use for preparing asphalt mixtures and bituminous products.

Bitumen as a binder in the asphalt mixture has two critical features that affect the durability and mechanical resistance of asphalt:
- Adhesion between bitumen and stone aggregates, which depends mainly on the type of stone aggregate, with limestone or dolomite aggregates is satisfactory; with siliceous stone aggregates adhesion is often insufficient.
- Cohesion of bitumen, bitumen is ductile, but has virtually no elastic properties, which could help in the process of healing short-term damages (cracks) of asphalt pavement.

SI 23670A discloses an asphalt with added PMMA/ATH composite powder as a filler.

Garcia-Morales et al., Fuel, 2006, 85 (7-8), 936-943 refers to the effect of waste polymer addition on the rheology of modified bitumen.

Basaran et al., Journal of Composite Materials, 2008, 42(2), 2003-2025 discloses the time dependent behavior of a particle filled composite PMMA/ATH at elevated temperatures.

To improve the quality of the asphalt layers most often styrene-butadiene-styrene block copolymer (SBS) is added to the bitumen. The addition of SBS primarily improves the elastic properties of bitumen, but additionally also the adhesion between bitumen and stone aggregates. Improvement of bitumen quality with the addition of SBS can be detected as an increase of the softening temperature by the method of ring and ball (EN 1427) and reduced temperature of breaking point by the Fraass method (EN 12593). To uniformly add SBS to bitumen elevated temperatures (round 180°C) and time consuming mixing with high shear forces are needed. The market price of the bitumen modified with SBS is about 150% of price for unmodified bitumen. In the production of asphalt containing SBS modified bitumen producers must increase the temperature in the production for approx. 20°C and a slightly extended mixing time in asphalt mixer. Also asphalt pavement containing SBS modified bitumen must be built in at app. 20°C higher temperatures than conventional asphalt. Of course, there are other additions to the bitumen like EVA (ethylene-vinyl acetate), paraffin waxes, natural asphalt, processed scrap tires, which usually reaches lower level of improvement to the quality of asphalt layer as the SBS. Alternatively means for asphalt quality improvement can be added to filler. Additions to the filler such as lime and cement only contribute to the adhesion between bitumen and stone aggregate, but do not contribute to the elastic properties of asphalt mixtures.

It is, therefore, an object of the present invention to provide a bitumen mixture which overcomes the drawbacks of the prior art. In particular, a bitumen mixture shall be provided which can be prepared with short-term mixing with low shear and at normal bitumen temperatures of about 160°C. Further, a bitumen mixture shall be provided which overcomes the drawbacks of the prior art by featuring improved adhesion when used in asphalt mixtures and which increases the elasticity of an asphalt mixture and, therefore, quality of asphalt pavement.

Described herein is a modified bitumen, comprising 50 to 99.9 parts by weight of bitumen and 0.1 to 50 parts by weight of polymethylmethacrylate/aluminium hydroxide (PMMA/ATH) composite dust.

It is preferred that the PMMA/ATH composite dust comprises 50 to 70 parts by weight of ATH and 30 to 50 parts by weight of PMMA.

Preferably, the PMMA/ATH composite dust mainly contains a fraction of PMMA/ATH composite dust with a nominal grain size below 1 mm.

The object has been achieved by a method for preparing an asphalt mixture comprising the steps of a) providing a stone aggregate, b) providing modified bitumen obtainable by a method for preparing modified bitumen, consisting of the steps of aa) providing bitumen, bb) providing PMMA/ATH composite dust, and cc) mixing the bitumen and the PMMA/ATH composite dust, c) mixing the stone aggregate and the modified bitumen.

Moreover, the object has been achieved by an asphalt mixture obtainable by the inventive method.

Finally, the object has been achieved by bituminous products, preferably bitumen waterproofing sheets, cold bituminous primer, bituminous adhesive compound, bituminous compound for filling cracks in road construction, bituminous roofing sheets and bituminous shingles, comprising the inventive modified bitumen.

PMMA/ATH composite consists of aluminum hydroxide, inorganic components - Al(OH)₃ = ATH, chemically bonded with the acrylic polymer - polymethylmethacrylate - PMMA. The composition of the material is completely homogeneous: 50% to 70% (m/m) of ATH and 30% to 50% (w/w) of PMMA with minor amounts of additives and pigments embedded.

However, pigments inside the composite are just optional, and preferably inert pigments are used as filler preferably only inert aluminium hydroxide is used. Additional monomers react in the phase of consolidation.

PMMA/ATH composite dust is a secondary raw material, which is side produced from surface treatment of PMMA/ATH composite panels. PMMA/ATH composite dust is not considered as a hazardous substance and therefore does not require special labels. It has a density of from 1.70 g/ml to 1.76 g/ml and is not soluble in water. It is stable at normal temperatures and storage conditions. Thermal decomposition occurs at temperatures over 200°C. At thermal decomposition ATH released water vapors. PMMA/ATH composite dust is not reactive with other substances.

PMMA/ATH composite dust is chemically stable product and is not a toxic substance. There is no migration in dust particles, which would affect the food and raise the vapor or leak. Solid surface of PMMA/ATH composites have been used for many years in areas where cleanliness and hygiene are important such as health clinics, hospitals, dental clinics, scientific laboratories.

In the environment, it is completely inert material. Scrap PMMA/ATH composite is non-hazardous waste.

PMMA/ATH composite dust is available as secondary raw material. Dust with a nominal grain size fraction below 1 mm is usable for mixing in the bitumen. Larger fractions of PMMA/ATH composite dust must be crushed or removed before mixing in the bitumen. PMMA/ATH composite dust according to the invention is added to the bitumen tank with a stirrer. Pre-heating of the PMMA/ATH composite dust is not necessary. Upper limit of content of PMMA/ATH composite dust in the bitumen is 50% (w/w), that is weight percent of the total weight of bitumen with additives.

For uniformly adding PMMA/ATH composite dust in the bitumen is sufficient short-term mixing with small shear forces. In the production of asphalt containing PMMA/ATH composite dust modified bitumen, it is not necessary to increase the temperature of the production and is also not necessary to extend the mixing time in the asphalt mixer. PMMA/ATH composite dust modified bitumen can also be used in all bituminous products, where we need improved adhesion and cohesion properties of bitumen such as bitumen waterproofing sheets, cold bituminous primer, bituminous adhesive compound, bituminous compound for filling cracks in road construction, bituminous roofing sheets and bituminous shingles.

It was surprisingly found by the inventors that modified bitumen can be prepared in the invention way by short-term mixing with low shear at normal bitumen temperatures of about 160°C. Inventive modified bitumen when used in an asphalt mixture can improve the adhesion between the binder, stone aggregates and fillers, increases the elasticity of the asphalt mixture and, thus, causes excellent quality of asphalt pavement. Asphalt mixtures with the addition of PMMA/ATH composite dust in the bitumen according to the present invention can be produced at normal bitumen temperatures which are determined by the type of input on modified bitumen.

Additional features and advantages of the present invention will become apparent in the following detailed description on the basis of examples with reference to the drawings, wherein
Fig. 1 shows a SEM image of PMMA/ATH composite dust with 900x magnification.
Fig. 2 shows resistance to permanent deformation due to addition of PMMA/ATH composite dust.

### Examples

Base bitumen was paving grade bitumen B 70/100 from producer OMV refinery Schwechat. According to the standard IP-143 20% (w/w) of asphaltenes was determined in the bitumen. Density of used PMMA/ATH composite dust was 1.740 g/cm³. To observe the morphology of the dust particles JEOL JSM-5500 scanning electron microscope was used. The particle size distribution of PMMA/ATH composite dust was homogeneous with a mean diameter of less than 20 µm. The particles did not have the same shape and almost, but all of them had smooth surface. Some of the particles were bonded to each other and were acting as an adhesive to the neighboring particles of larger dimensions.

L5M Silverson homogenizer was used for laboratory PMMA/ATH composite dust in the bitumen. Different quantities of PMMA/ATH composite dust were mixed in bitumen for 1.5 hours.

Properties of bitumen were determinated with standard test method such as softening point according to ring and ball method (EN 1427), penetration test (EN 1426) and Fraass breaking point method (EN 12593). For 25% (w/w) of PMMA/ATH composite dust in the bitumen we found a 7.4°C increase in temperature of softening point (EN 1427), and 4°C reduced the temperature of Fraass breaking point (EN 12593) with respect to the base bitumen.

Rheological investigation at 60°C also showed an increase in rut formation parameter G*/sin(δ). Basic bitumen had rut formation parameter 1,330 Pa, at 25% (m/m) content of PMMA / ATH composite dust in the bitumen was measured rut formation of parameter 3650 Pa, which means almost three times greater resistance to the formation of ruts.

Rut resistance was proved also on asphalt mixtures. Three asphalt mixtures were prepared. First AC 8 surf asphalt mixture was prepared with paving grade binder B 70/100. Second AC 8 surf asphalt mixture was similar, only 1.1% (w/w) of PMMA/ATH composite dust was added as filler according to former Slovenian Patent SI 23670 (A). Third AC 8 surf asphalt mixture was similar, only 1.7% (w/w) of PMMA/ATH composite dust was added in bitumen according to this innovation. In second and third asphalt mixture percent of addition is calculated to whole mass of asphalt mixture.

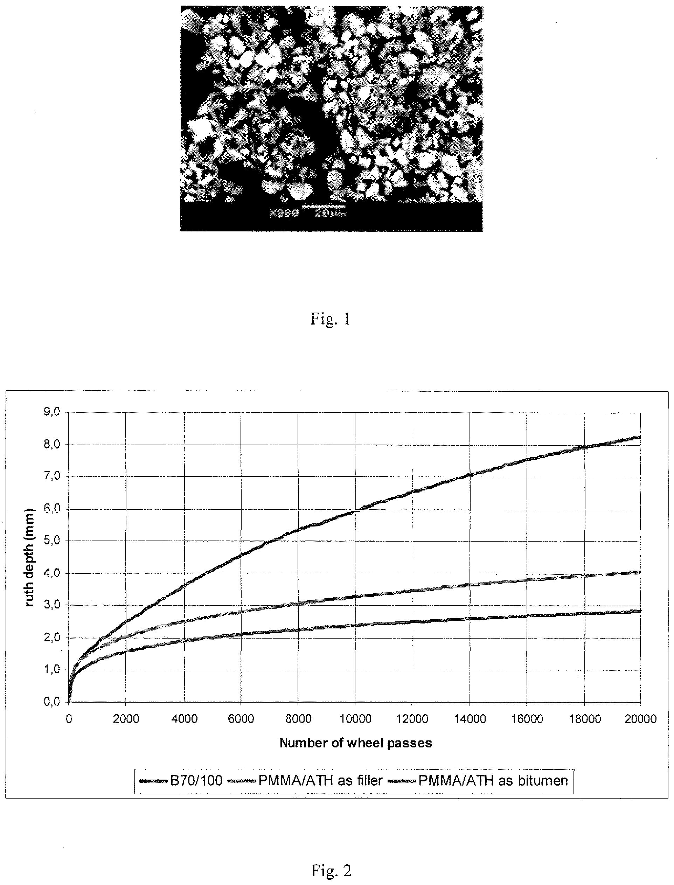

Shown in table 1 and figure 2 are results of wheel tracking test according to EN 12697-22 small - size device in the air (procedure B). Thickness of specimens was 40 mm and test temperature 50°C.

**Table 1. Results of wheel tracking (PRD, WTS), for AC 8 surf mixture with PMMA/ATH modified bitumen (25%) and control mixture**

| sample | PRD_{AIR} | WTS_{AIR} |
|---|---|---|
| | % | mm/10³ load cycles |
| control | 18.3 | 0.46 |
| PMMA/ATH added in filler | 9.0 | 0.16 |
| PMMA/ATH added in bitumen | 6.3 | 0.09 |

The features disclosed in the foregoing description, in the claims and in the accompanying drawings may, both separately and in any combination, be material for realizing the invention in diverse forms thereof.

## Claims

1. Method for preparing an asphalt mixture comprising the steps of
a) providing a stone aggregate,
b) providing modified bitumen obtainable by a method for preparing modified bitumen, consisting of the steps of
aa) providing bitumen,
bb) providing PMMA/ATH composite dust, and
cc) mixing the bitumen and the PMMA/ATH composite dust.
c) mixing the stone aggregate and the modified bitumen.

2. Asphalt mixture obtainable according to the method of claim 1.

## Patentansprüche

1. Verfahren zum Herstellen eines Asphaltgemischs umfassend die Schritte
a) Bereitstellen eines Steinaggregats,
b) Bereitstellen von modifiziertem Bitumen erhältlich nach einem Verfahren zum Herstellen von modifiziertem Bitumen bestehend aus den Schritten
aa) Bereitstellen von Bitumen,
bb) Bereitstellen von PMMA/ATH-Verbundstoffstaub, und
cc) Mischen des Bitumens und des PMMA/ATH-Verbundstoffstaubs,
c) Mischen des Steinaggretats und des modifizierten Bitumen.

2. Asphaltgemisch erhältlich nach dem Verfahren nach Anspruch 1.

## Revendications

1. Procédé pour préparer un mélange d'asphalte comprenant les étapes consistant à :
a) fournir un agrégat pierreux,
b) fournir un bitume modifié pouvant être obtenu au moyen d'un procédé pour préparer un bitume modifié, comprenant les étapes consistant à :
aa) fournir du bitume,
bb) fournir une poussière composite PMMA/ATH, et à
cc) mélanger le bitume et la poussière composite PMMA/ATH,
c) mélanger l'agrégat pierreux et le bitume modifié.

2. Mélange d'asphalte pouvant être obtenu selon le procédé de la revendication 1.
